# EUROPEAN PATENT SPECIFICATION

(11) **EP 3 522 526 B1**
(45) Date of publication and mention of the grant of the patent: **04.05.2022**
(21) Application number: 17856014.0
(22) Date of filing: 25.09.2017
(51) Int. Cl.: G11B 20/00, G11B 27/034, G11B 27/32, H04N 5/913, H04N 5/232

(54) **EDITING METHOD, CREATION METHOD, EDITING DEVICE, CREATION DEVICE, AND RECORDING MEDIUM**
BEARBEITUNGSVERFAHREN, ERZEUGUNGSVERFAHREN, BEARBEITUNGSVORRICHTUNG, ERZEUGUNGSVORRICHTUNG UND AUFZEICHNUNGSMEDIUM
PROCÉDÉ D'ÉDITION, PROCÉDÉ DE CRÉATION, DISPOSITIF D'ÉDITION, DISPOSITIF DE CRÉATION ET SUPPORT D'ENREGISTREMENT

(30) Priority: 29.09.2016 JP 2016191457
(43) Date of publication of application: 07.08.2019
(73) Proprietor: Panasonic Intellectual Property Management Co., Ltd., Osaka-shi, Osaka 540-6207 (JP)
(72) Inventor: FUKUSHIMA, Toshiyuki, Osaka-shi, Osaka 540-6207 (JP); UESAKA, Yasushi, Osaka-shi, Osaka 540-6207 (JP); ITO, Atsushi, Osaka-shi, Osaka 540-6207 (JP); WATANABE, Kiyoaki, Osaka-shi, Osaka 540-6207 (JP); NORITAKE, Toshiya, Osaka-shi, Osaka 540-6207 (JP); KOUNO, Kazuhiko, Osaka-shi, Osaka 540-6207 (JP); KASHIWAGI, Yoshiichiro, Osaka-shi, Osaka 540-6207 (JP); KOZUKA, Masayuki, Osaka-shi, Osaka 540-6207 (JP); MORI, Yoshihiro, Osaka-shi, Osaka 540-6207 (JP)
(74) Representative: Vigand, Philippe
(86) International application number: PCT/JP2017/034416
(87) International publication number: WO 2018/062061

(56) References cited:
- EP-A1- 1 482 508
- WO-A1-2015/194102
- JP-A- 2004 241 078
- JP-A- 2010 081 048
- JP-A- 2012 080 305
- JP-A- 2012 147 303
- KR-A- 20000 000 568
- US-A1- 2003 225 784

## Description

### TECHNICAL FIELD

The present disclosure relates to an editing method, a generating method, an editing device, a generating device and a recording medium.

### BACKGROUND ART

Patent Literature 1 discloses a technique of accumulating still images.

For example, a number of pixels of a shooting device such as a digital camera is increasing year by year. In recent years, there are shooting devices whose number of pixels exceeds 6 million, and shooting devices whose number of pixels exceeds 10 million. In this regard, resolutions of display devices such as television receivers (referred to as "televisions" below) that display moving images increase to 720 × 480 pixels (approximately 340 thousand pixels) of standard definition (SD), 1920 × 1080 pixels (approximately 2 million pixels and 2K images) of high definition (HD), and 3840 × 2160 pixels (approximately 8 million 300 thousand pixels and 4K images), 4096 × 2160 pixels (approximately 8 million 850 thousand pixels and DCI4K) and 7680 × 4320 pixels (approximately 33 million 180 thousand pixels and 8K images) of ultra high definition (UHD). Thus, higher image quality of display devices is advancing.

As display devices (e.g., televisions) provide higher image quality, there are increasingly occasions that the display devices (e.g., televisions) display pictures (still images) shot by shooting devices (e.g., digital cameras). Furthermore, a 4K image display technique and a dynamic range expansion technique are also proposed for display devices (e.g., televisions). More specifically, as a scheme of maintaining a dark tone, and expressing bright light such as specular reflection light that is difficult to express by current television signals as more actual brightness, a high dynamic range (HDR) technique (referred to as "HDR" below) is proposed.

### Citation List

### Patent Literature

PTL 1: Unexamined Japanese Patent Publication No. 2000-354227

JP 2010 081048 A discloses an image processing apparatus that includes an image file acquisition section for acquiring an image file, an image processing section, a determination section, and a control section. It allows a color tone of a reduced image to coincide with that of a developed image when handling an image file of a RAW image.

US 2003/0225784 A1 discloses a method for preventing partial deletion or editing of video and/or audio streams recorded on a rewritable storage medium, for example an optical disk.

### SUMMARY

When this technique is used, it is desired to display images that reflect a creator's or editor's intention of the images.

The present disclosure provides an editing method that can display images that reflect a creator's or editor's intention of images, a generating method, an editing device, a generating device or a recording medium.

An editing method according to one aspect of the present disclosure is defined in claim 1.

A generating method according to one aspect of the present disclosure is defined in claim 2.

A recording medium according to one aspect of the present disclosure is defined in claim 5.

The present disclosure can provide an editing method that can display images that reflect a creator's or editor's intention of the images, a generating method, an editing device, a generating device, or a recording medium.

### BRIEF DESCRIPTION OF DRAWINGS

FIG. 1A is a view schematically illustrating a configuration example of a reproduction system according to a first exemplary embodiment.
FIG. 1B is a view schematically illustrating a configuration example of the reproduction system according to the first exemplary embodiment.
FIG. 2Ais a view schematically illustrating a configuration example of image data according to the first exemplary embodiment.
FIG. 2B is a view schematically illustrating another configuration example of image data according to the first exemplary embodiment.
FIG. 3 is a block diagram schematically illustrating a configuration example of a generating device according to the first exemplary embodiment.
FIG. 4 is a block diagram schematically illustrating a configuration example of a reproduction device according to the first exemplary embodiment.
FIG. 5 is a flowchart illustrating an example of edit processing of an editing device according to the first exemplary embodiment.
FIG. 6 is a flowchart illustrating an example of reproduction processing of the reproduction device according to the first exemplary embodiment.
FIG. 7 is a view schematically illustrating a configuration example of edit management information according to the first exemplary embodiment.
FIG. 8 is a view schematically illustrating a configuration example of image data according to another exemplary embodiment.
FIG. 9 is a flowchart illustrating an example of data storage processing of a reproduction device according to the other exemplary embodiment.
FIG. 10 is a flowchart illustrating an example of image data generation processing of a generating device according to the exemplary embodiment.

### DESCRIPTION OF EMBODIMENTS

### (1. First exemplary embodiment)

### (1-1. Configuration)

First, a configuration of a reproduction system according to the present exemplary embodiment will be described.

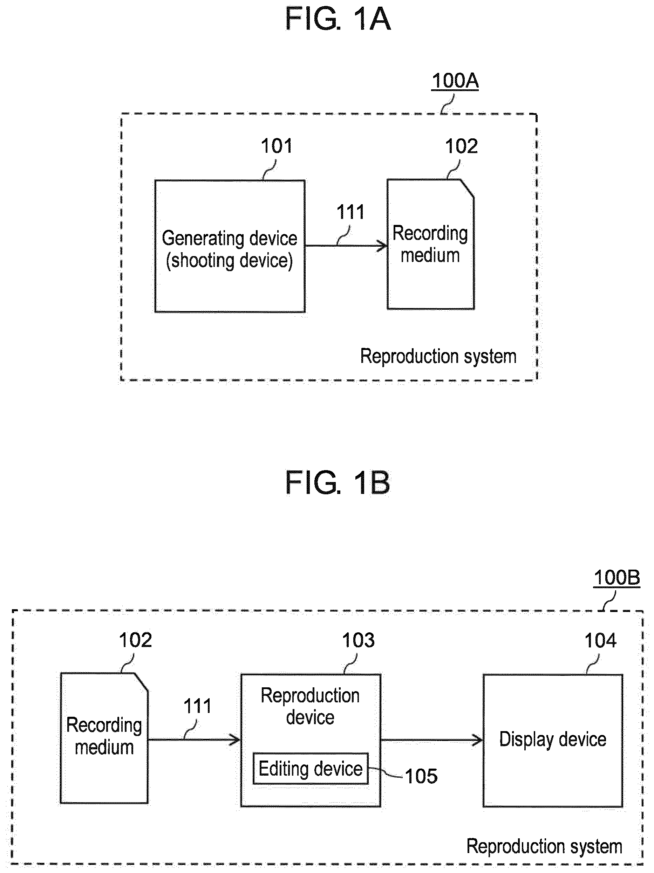

FIGS. 1A and 1B are views schematically illustrating a configuration example of the reproduction system according to the first exemplary embodiment.

The reproduction system includes generating device 101, reproduction device 103, and display device 104. In addition, the present exemplary embodiment will describe the reproduction system separately as reproduction system 100A on a side of generating device 101, and reproduction system 100B on a side of reproduction device 103 for ease of description.

In addition, FIG. 1A schematically illustrates reproduction system 100A of the reproduction system on the side of generating device 101 including generating device 101 that generates image data 111 and records image data 111 in recording medium 102. FIG. 1B schematically illustrates reproduction system 100B of the reproduction system on the side of reproduction device 103 including reproduction device 103 that displays image data 111 recorded in recording medium 102 and display device 104.

Generating device 101 illustrated in FIG. 1A is a shooting device such as a digital video camera, a digital still camera, or a smartphone. Generating device 101 performs shooting to generate image data 111 that is a still image. In addition, generating device 101 may be an editing device that edits image data generated by a shooting device.

As illustrated in FIG. 1A, generating device 101 records generated image data 111 in recording medium 102 such as a CompactFlash (CF) (registered trademark) card, a universal serial bus (USB) memory, or a secure digital (SD) memory card. When recording medium 102 having image data 111 recorded thereon is detached from generating device 101 and is connected to another device (e.g., reproduction device 103), image data 111 can be transmitted to this device (e.g., reproduction device 103).

In addition, a method for transmitting above image data 111 is an example of the present exemplary embodiment. In the present disclosure, the method for transmitting image data 111 is not limited to transmission via recording medium 102. For example, image data 111 may be transmitted via a recording medium such as an optical disk or a magnetic disk. For example, part or entirety of image data 111 may be transmitted from generating device 101 to another device (e.g., reproduction device 103) by wired communication or wireless communication. Furthermore, image data 111 may not be directly transmitted from generating device 101 to another device (e.g., reproduction device 103). For example, part or entirety of image data 111 may be transmitted from generating device 101 to another device (e.g., reproduction device 103) further via another equipment (e.g., a router or a server).

Reproduction device 103 illustrated in Fig. 1B is a reproduction device such as a Blu-ray (registered trademark) recorder or a Blu-ray (registered trademark) player. Reproduction device 103 displays on display device 104 an image obtained by reproducing image data 111. Display device 104 is, for example, a liquid crystal display device or an organic electro luminescence (EL) display device. Furthermore, reproduction device 103 includes editing device 105. Editing device 105 has a function of editing image data 111.

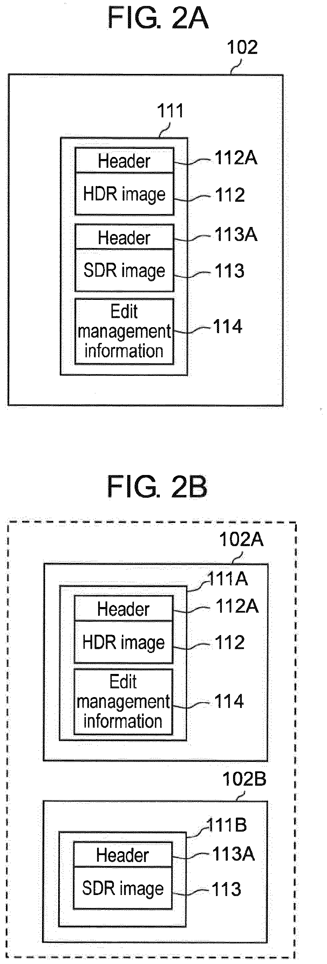

FIG. 2A is a view schematically illustrating a configuration example of image data 111 according to the first exemplary embodiment.

FIG. 2B is a view schematically illustrating another configuration example of image data 111 according to the first exemplary embodiment.

In this regard, FIG. 2A illustrates the example where image data 111 is recorded in one recording medium 102. FIG. 2B illustrates the example where image data 111 is divided into image data 111A and image data 111B and is recorded in two of recording medium 102A and recording medium 102B.

As illustrated in FIG. 2A, image data 111 includes HDR image 112, standard dynamic range (SDR) image 113, and edit management information 114. Alternatively, as illustrated in FIG. 2B, image data 111A includes HDR image 112 and edit management information 114, and image data 111B includes SDR image 113.

HDR image 112 is image data (HDR image) of a still image that supports an HDR, and is given header 112A. SDR image 113 is image data (SDR image) of a still image that supports an SDR, and is given header 113A. Furthermore, a luminance range (dynamic range) of HDR image 112 is wider than a luminance range (dynamic range) of SDR image 113. More specifically, a maximum luminance of HDR image 112 is higher than a maximum luminance of SDR image 113.

Edit management information 114 is information indicating whether or not to permit editing at least one of HDR image 112 and SDR image 113. Edit management information 114 may include information indicating whether or not to permit editing HDR image 112. Edit management information 114 may include information indicating whether or not to permit editing SDR image 113. Edit management information 114 may include information indicating to permit editing both of HDR image 112 and SDR image 113. Edit management information 114 may include information indicating not to permit editing both of HDR image 112 and SDR image 113. In the present exemplary embodiment, the edit means deletion, conversion or change (replacement) of at least one of HDR image 112 and SDR image 113. Furthermore, the change may include, for example, trimming, or include, for example, changing at least one of a color range, color characteristics, a luminance range (dynamic range), luminance characteristics, a resolution, a view angle, and the like.

In addition, FIG. 2A illustrates edit management information 114 as individual information in addition to header 112A and header 113A. However, edit management information 114 may be included in header 112A or header 113A.

Furthermore, FIG. 2A illustrates the example where HDR image 112, SDR image 113 and edit management information 114 are recorded as one image data 111 in recording medium 102. However, at least part of HDR image 112, SDR image 113 and edit management information 114 may be recorded as individual data in another recording medium 102.

In addition, FIG. 2B illustrates the example where image data 111A including HDR image 112 and edit management information 114 is recorded in one recording medium 102A, and image data 111B including SDR image 113 is recorded in another one recording medium 102B.

Next, a configuration of generating device 101 will be described.

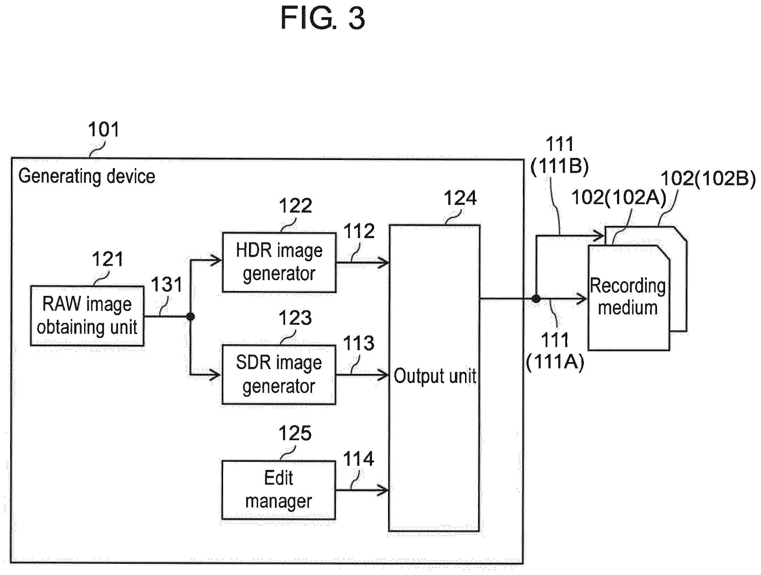

FIG. 3 is a block diagram schematically illustrating the configuration example of generating device 101 according to the first exemplary embodiment.

As illustrated in FIG. 3, generating device 101 includes RAW image obtaining unit 121, HDR image generator 122, SDR image generator 123, output unit 124, and edit manager 125.

In addition, the constituent elements illustrated in FIG. 3 are part of constituent elements of generating device 101. FIG. 3 does not illustrate other constituent elements such as a power supply circuit.

RAW image obtaining unit 121 is, for example, a shooting unit. RAW image obtaining unit 121 shoots a still image to obtain (generate) RAW data 131 of the still image.

HDR image generator 122 performs color correction (grating) on RAW data 131 to generate HDR image 112. For example, HDR image generator 122 generates 10-bit HDR image 112 from RAW data 131 by using an HDR-Electro Optical Transfer Function (HDR-EOTF).

SDR image generator 123 generates SDR image 113 from RAW data 131. For example, SDR image generator 123 generates 8-bit SDR image 113 from RAW data 131 by using an SDR-EOTF.

In addition, numbers of bits of above-described HDR image 112 and SDR image 113 are merely exemplary. The numbers of bits of HDR image 112 and SDR image 113 in the present disclosure are by no means limited to the above-described numbers of bits.

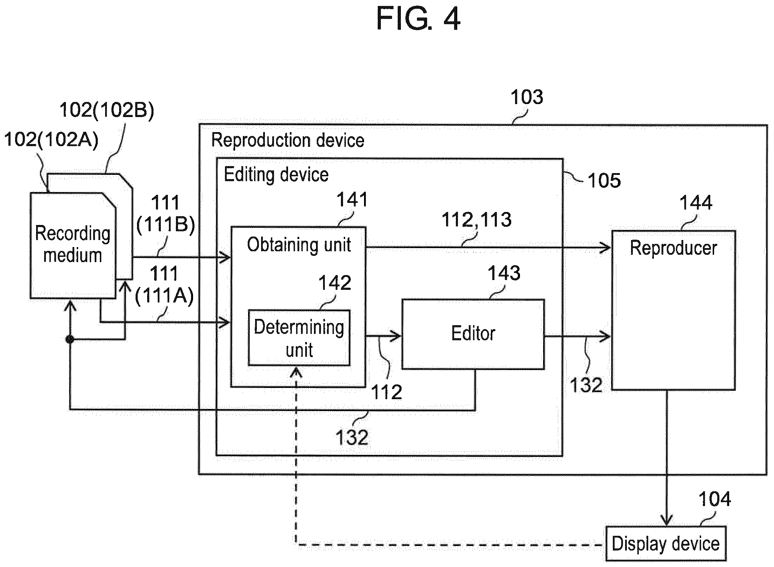

Edit manager 125 generates edit management information 114. Generating device 101 may include an operation receiver (not illustrated) that receives a user's operation. Furthermore, edit manager 125 may generate edit management information 114 based on, for example, the user's operation received via this operation receiver. A creator's intention of an image may be reflected in the user's operation. The operation receiver may be, for example, a touch panel or a switch, a device that receives a signal transmitted from a remote controller or a smartphone, or a device that receives a signal transmitted from a computer via a network. The user's operation may set one of whether or not to permit editing HDR image 112, whether or not to permit editing SDR image 113, whether or not to edit both of HDR image 112 and SDR image 113, and whether or not to forbid editing both of HDR image 112 and SDR image 113. For example, whether or not to permit conversion to generate converted SDR image 132 (see FIG. 4) from HDR image 112 may be set by the user's operation. Edit management information 114 will be described below.

Output unit 124 outputs image data 111 including HDR image 112, SDR image 113 and edit management information 114. Furthermore, output unit 124 records image data 111 in one recording medium 102. Alternatively, output unit 124 may divide image data 111 into a plurality of items of image data (e.g., image data 111A and image data 111B), and record the plurality of items of image data in a plurality of recording media 102 (e.g., recording medium 102A and recording medium 102B), respectively.

In addition, output unit 124 may output HDR image 112, SDR image 113 and edit management information 114 as individual data. Furthermore, output unit 124 may convert each of HDR image 112, SDR image 113 and edit management information 114 into a predetermined image format, and package each of HDR image 112, SDR image 113 and edit management information 114 according to the predetermined image format. Furthermore, output unit 124 may compress and encode each of HDR image 112, SDR image 113 and edit management information 114, or image data 111. Furthermore, output unit 124 may output RAW data 131 as is.

Next, a configuration of reproduction device 103 will be described.

FIG. 4 is a block diagram schematically illustrating the configuration example of reproduction device 103 according to the first exemplary embodiment.

As illustrated in FIG. 4, reproduction device 103 includes editing device 105 and reproducer 144. Editing device 105 includes obtaining unit 141, determining unit 142, and editor 143.

In addition, the constituent elements illustrated in FIG. 4 are part of constituent elements of reproduction device 103. FIG. 4 does not illustrate other constituent elements such as a power supply circuit.

In addition, FIG. 4 illustrates recording medium 102 that provides image data 111 to reproduction device 103, and display device 104 that displays an image signal obtained when reproduction device 103 reproduces image data 111.

In addition, FIG. 4 illustrates recording medium 102A that provides image data 111A to reproduction device 103, and recording medium 102B that provides image data 111B to reproduction device 103. However, image data 111 may be provided from one recording medium 102 to reproduction device 103.

In addition, in the present exemplary embodiment, recording medium 102A and recording medium 102B will be collectively referred to as recording medium 102, and image data 111A and image data 111B will be collectively referred to as image data 111. That is, in the present exemplary embodiment, recording medium 102 may be single recording medium 102 or may include recording medium 102A and recording medium 102B. Furthermore, image data 111 may be single image data 111 or may include image data 111A and image data 111B.

Obtaining unit 141 obtains image data 111 from recording medium 102. Determining unit 142 determines whether or not to edit image data 111 based on edit management information 114 (see FIG. 2A or 2B).

Editor 143 edits HDR image 112 or SDR image 113 based on edit management information 114. Editor 143 generates, for example, converted SDR image 132 from HDR image 112 based on edit management information 114.

Reproducer 144 reproduces one of HDR image 112, SDR image 113 and converted SDR image 132.

In addition, reproduction device 103 may include the operation receiver (not illustrated) that receives a user's operation. The editor 143 and reproducer 144 may reproduce (or generate or reproduce) an image based on the user's operation received via this operation receiver. An editor's intention of an image may be reflected in the user's operation.

### (1-2. Operation)

Next, an operation of editing device 105 will be described.

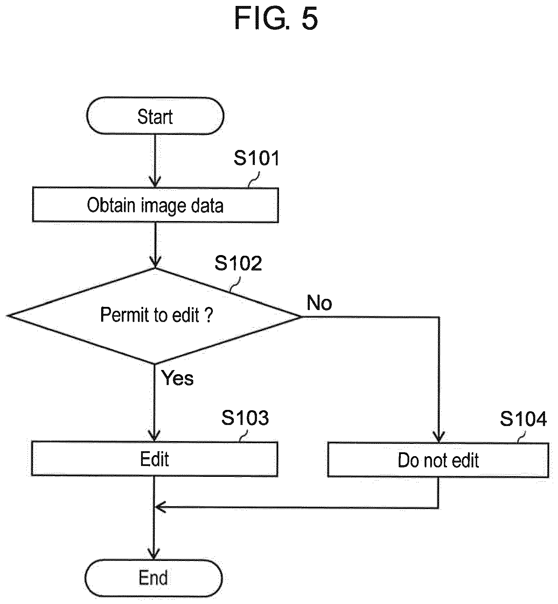

FIG. 5 is a flowchart illustrating an example of an editing operation of editing device 105 according to the first exemplary embodiment.

Obtaining unit 141 obtains image data 111 including HDR image 112, SDR image 113, and edit management information 114 (step S101).

Next, determining unit 142 determines whether or not editing at least one of HDR image 112 and SDR image 113 is permitted based on edit management information 114 obtained in step S101 (step S102).

When determining unit 142 determines in step S102 that edit management information 114 indicates to permit editing HDR image 112, SDR image 113, or both (Yes in step S102), editor 143 edits an image (HDR image 112, SDR image 113, or both) that is permitted to edit, based on edit management information 114 (step S103).

When determining unit 142 determines in step S102 that edit management information 114 indicates not to permit editing both of HDR image 112 and SDR image 113 (No in step S102), editor 143 does not edit both of HDR image 112 and SDR image 113 (step S104).

Next, an example of reproduction processing of reproduction device 103 including editing device 105 will be described.

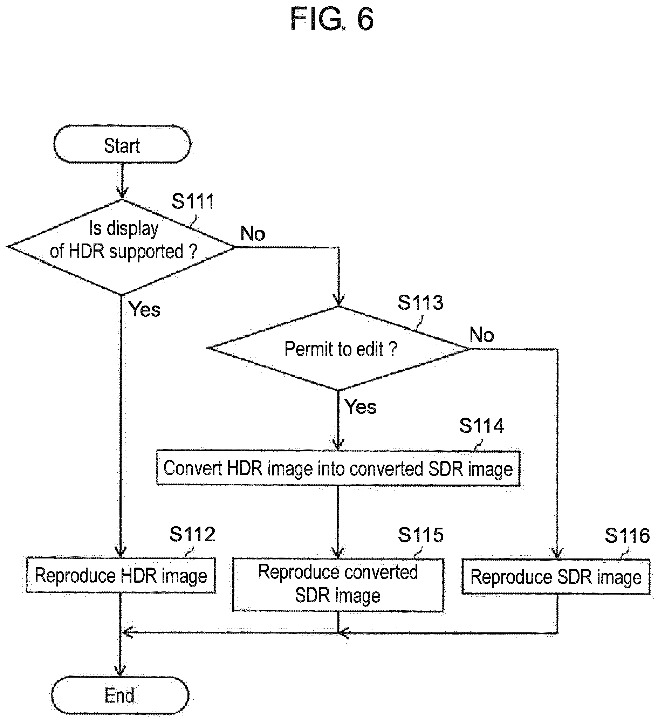

FIG. 6 is a flowchart illustrating an example of a reproduction operation of reproduction device 103 according to the first exemplary embodiment.

In addition, an example of an operation of displaying one of HDR image 112, SDR image 113 and converted SDR image 132 on display device 104 will be described with reference to the flowchart in FIG. 6.

Determining unit 142 of reproduction device 103 determines whether or not display device 104 can display HDR image 112 (step Sill). That is, determining unit 142 determines in step S111 whether or not display device 104 supports displaying HDR image 112 (whether or not display device 104 has a function of displaying HDR image 112). When receiving from display device 104, for example, a signal (indicated by a broken line in FIG. 4) indicating that display device 104 can display HDR image 112, determining unit 142 determines that display device 104 can display HDR image 112. When determining unit 142 cannot receive from display device 104 the signal indicating that display device 104 can display HDR image 112 or display device 104 cannot display HDR image 112 (supports only SDR image 113), for example, determining unit 142 determines that display device 104 cannot display HDR image 112. Alternatively, a user who uses reproduction device 103 may set whether or not display device 104 can display HDR image 112, to reproduction device 103.

When determining unit 142 determines in step S111 that display device 104 can display HDR image 112 (Yes in step S111), reproducer 144 reproduces HDR image 112 (step S112).

When determining unit 142 determines in step S111 that display device 104 cannot display HDR image 112 (No in step Sill) (in other words, display device 104 supports only displaying SDR image 113), determining unit 142 determines whether or not conversion for generating converted SDR image 132 from HDR image 112 is permitted, based on edit management information 114 (step S113).

Although not illustrated, in step S113, determining unit 142 also determines whether or not edit management information 114 indicates to permit editing SDR image 113. When determining that edit management information 114 indicates to permit editing SDR image 113, determining unit 142 determines to convert SDR image 113. Furthermore, when determining in step S113 that edit management information 114 indicates not to permit editing SDR image 113, determining unit 142 determines not to convert SDR image 113. In addition, even when determining that edit management information 114 indicates to permit editing SDR image 113, determining unit 142 may determine not to convert SDR image 113.

Hereinafter, a configuration example of edit management information 114 will be described.

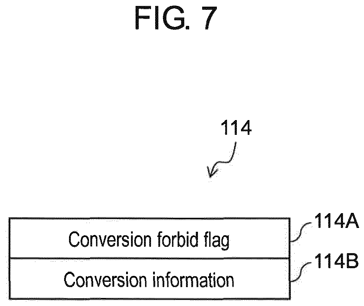

FIG. 7 is a view schematically illustrating a configuration example of edit management information 114 according to the first exemplary embodiment.

As illustrated in FIG. 7, edit management information 114 includes, for example, conversion forbid flag 114A and conversion information 114B. Conversion forbid flag 114A indicates, for example, whether to forbid or permit converting HDR image 112 into converted SDR image 132. For example, determining unit 142 determines in step S113 whether or not to convert HDR image 112 into converted SDR image 132 based on this conversion forbid flag 114A.

In addition, the operation example where the determining unit 142 performs determination in step S113 based only on edit management information 114 has been described above. However, the present disclosure is by no means limited to this operation example. For example, determining unit 142 may first determine whether or not to convert HDR image 112 into converted SDR image 132 based on other factors (e.g., characteristics of HDR image 112, characteristics of SDR image 113, characteristics of display device 104, or a combination of these characteristics), and determine to forbid or permit the conversion based on edit management information 114 when it is determined to perform conversion. Alternatively, after it is determined to perform the conversion based on edit management information 114, whether or not to perform the conversion may be determined based on the other factors.

Back to FIG. 6, the flowchart will be described.

When determining unit 142 determines in step S113 that it is permitted to convert HDR image 112 into converted SDR image 132 (it is permitted to generate converted SDR image 132 from HDR image 112) (Yes in step S113), editor 143 generates converted SDR image 132 from HDR image 112 (step S114).

Furthermore, reproducer 144 reproduces generated converted SDR image 132 (step S115).

When determining unit 142 determines in step S113 that it is not permitted to convert HDR image 112 into converted SDR image 132 (it is not permitted to generate converted SDR image 132 from HDR image 112) (No in step S113), reproducer 144 does not convert HDR image 112 into converted SDR image 132, and reproduces SDR image 113 (step S116).

Furthermore, the image reproduced in step S112, step S115 or step S116 is displayed on display device 104.

### [1-3. Effects and others]

As described above, according to the present exemplary embodiment, an editing method includes: an obtaining step of obtaining a high quality image and a first low quality image that are still images showing an identical scene, and edit management information that indicates whether or not to permit editing at least one image of the high quality image and the first low quality image; and an editing step of editing the at least one image when the edit management information indicates to permit editing the at least one image, and when the edit management information indicates not to permit editing the at least one image, the at least one image is not edited.

In addition, HDR image 112 is an example of the high quality image. SDR image 113 is an example of the first low quality image. Edit management information 114 is an example of the edit management information. Step S101 is an example of the obtaining step. Step S103 is an example of the editing step.

For example, in the example described in the first exemplary embodiment, the editing method includes: step S101 of obtaining HDR image 112 and SDR image 113 that are still images showing an identical scene, and edit management information 114 that indicates whether or not to permit editing at least one image of HDR image 112 and SDR image 113; and step S103 of editing the at least one image when edit management information 114 indicates to permit editing the at least one image, and when edit management information 114 indicates not to permit editing the at least one image, the at least one image is not edited.

According to this editing method, it is possible to control whether or not to permit editing device 105 to edit at least one image of HDR image 112 and SDR image 113, based on edit management information 114. Consequently, display device 104 such as a television can display an image based on edit management information 114. That is, display device 104 can display images that reflect a creator's or editor's intention of the images.

According to the editing method, the edit management information may indicate whether or not to permit generating a second low quality image from the high quality image as the edit. In the editing step, the second low quality image may be generated from the high quality image when the edit management information indicates to permit generating the second low quality image.

In addition, converted SDR image 132 is an example of the second low quality image. Conversion to generate converted SDR image 132 from HDR image 112 is an example of the edit.

For example, in the example described in the first exemplary embodiment, according to the editing method, edit management information 114 may indicate whether or not to permit generating converted SDR image 132 from HDR image 112 as the edit. Furthermore, in step S103, converted SDR image 132 is generated from HDR image 112 when edit management information 114 indicates to permit generating converted SDR image 132.

According to this editing method, it is possible to control whether or not to permit editing device 105 to generate converted SDR image 132 from HDR image 112, based on edit management information 114.

According to the present exemplary embodiment, the generating method includes: an obtaining step of obtaining RAW data; an image generating step of generating from the RAW data a high quality image and a first low quality image that are still images showing an identical scene; a generating step of generating edit management information indicating whether or not to permit editing at least one image of the high quality image and the first low quality image; and an outputting step of outputting the high quality image, the first low quality image and the edit management information.

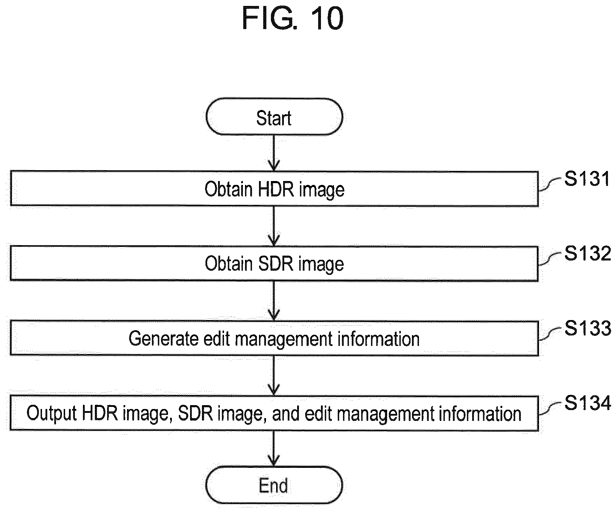

In addition, step S131 illustrated in FIG. 10 is an example of the obtaining step. Step S131 and step S132 are examples of the image generating step. Step S133 is an example of the generating step. Step S134 is an example of the outputting step. RAW data 131 is an example of the RAW data.

For example, in the example described in the exemplary embodiment, the generating method includes: step S131 of obtaining RAW data 131; step S131 and step S132 of generating from RAW data 131 HDR image 112 and SDR image 113 that are still images showing an identical scene; step S133 of generating edit management information 114 indicating whether or not to permit editing at least one image of HDR image 112 and SDR image 113; and step S134 of outputting HDR image 112, SDR image 113, and edit management information 114.

According to this generating method, it is possible to control whether or not to permit editing device 105 to edit at least one image of HDR image 112 and SDR image 113, based on edit management information 114. Consequently, display device 104 such as a television can display an image based on edit management information 114. That is, display device 104 can display images that reflect a creator's or editor's intention of the images.

According to the generating method, the edit management information may indicate whether or not to permit generating a second low quality image from the high quality image as the edit.

For example, in the example described in the first exemplary embodiment, edit management information 114 may indicate whether or not to permit generating converted SDR image 132 from HDR image 112 as the edit.

According to this generating method, it is possible to control whether or not to permit editing device 105 to generate converted SDR image 132 from HDR image 112, based on edit management information 114.

According to the present exemplary embodiment, the editing device includes: an obtaining unit that obtains a high quality image and a first low quality image that are still images showing an identical scene, and edit management information that indicates whether or not to permit editing at least one image of the high quality image and the first low quality image; and an editor that edits the at least one image when the edit management information indicates to permit editing the at least one image, and when the edit management information indicates not to permit editing the at least one image, the editing device does not edit the at least one image.

In addition, editing device 105 is an example of the editing device. Obtaining unit 141 is an example of the obtaining unit. Editor 143 is an example of the editor.

For example, in the example described in the first exemplary embodiment, editing device 105 includes: obtaining unit 141 that obtains HDR image 112 and SDR image 113 that are still images showing an identical scene, and edit management information 114 that indicates whether or not to permit editing at least one image of HDR image 112 and SDR image 113; and editor 143 that edits the at least one image when edit management information 114 indicates to permit editing the at least one image, and when the edit management information indicates not to permit editing the at least one image, editing device 105 does not edit the at least one image.

According to editing device 105, it is possible to control whether or not to permit editing device 105 to edit at least one image of HDR image 112 and SDR image 113, based on edit management information 114. Consequently, display device 104 such as a television can display an image based on edit management information 114. That is, display device 104 can display images that reflect a creator's or editor's intention of the images.

According to the present exemplary embodiment, the generating device includes: an obtaining unit that obtains RAW data; an image generator that generates from the RAW data a high quality image and a first low quality image that are still images showing an identical scene; a generator that generates edit management information indicating whether or not to permit editing at least one image of the high quality image and the first low quality image; and an output unit that outputs the high quality image, the first low quality image, and the edit management information.

In addition, generating device 101 is an example of the generating device. RAW image obtaining unit 121 is an example of the obtaining unit. HDR image generator 122 is an example of the image generator that generates the high quality image. SDR image generator 123 is an example of the image generator that generates the first low quality image. Edit manager 125 is an example of the generator. Output unit 124 is an example of the output unit.

For example, in the example described in the first exemplary embodiment, generating device 101 includes: RAW image obtaining unit 121 that obtains RAW data 131; an image generator that generates HDR image 112 and SDR image 113 that are still images showing an identical scene (HDR image generator 122 that generates HDR image 112 from RAW data 131, and SDR image generator 123 that generates SDR image 113 from RAW data 131); edit manager 125 that generates edit management information 114 indicating whether or not to permit editing at least one image of HDR image 112 and SDR image 113; and output unit 124 that outputs HDR image 112, SDR image 113 and edit management information 114.

According to this generating device 101, it is possible to control whether or not to permit editing device 105 to edit at least one image of HDR image 112 and SDR image 113, based on edit management information 114. Consequently, display device 104 such as a television can display an image based on edit management information 114. That is, display device 104 can display images that reflect a creator's or editor's intention of the images.

In the reproduction system according to the present exemplary embodiment, it is possible to control editing device 105 to edit at least one of HDR image 112 and SDR image 113 (e.g., convert HDR image 112 into converted SDR image 132), based on edit management information 114. When, for example, edit management information 114 forbids converting HDR image 112 into converted SDR image 132 and therefore display device 104 does not support reproducing the HDR image, reproduction device 103 can be controlled such that display device 104 reproduces SDR image 113 at all times. Consequently, images that reflect a creator's or editor's intention of the images are reproduced by reproduction device 103, and are displayed on display device 104.

According to the present exemplary embodiment, the recording medium has recorded thereon: a high quality image and a first low quality image that are still images showing an identical scene; and edit management information that indicates whether or not to permit editing at least one image of the high quality image and the first low quality image.

In this regard, recording media 102, 102A, 102B are examples of the recording medium.

For example, in the example described in the first exemplary embodiment, recording medium 102 has recorded thereon: HDR image 112 and SDR image 113 that are still images showing an identical scene; and edit management information 114 that indicates whether or not to permit editing at least one image of HDR image 112 and SDR image 113. Alternatively, HDR image 112 and edit management information 114 are recorded in recording medium 102A. SDR image 113 is recorded in recording medium 102B.

Edit management information 114 recorded in this recording medium 102 (102A) can control whether or not to permit editing device 105 to edit at least one image of HDR image 112 and SDR image 113 recorded in recording medium 102 (102A, 102B). Consequently, display device 104 such as a television can display an image based on edit management information 114. That is, display device 104 can display images that reflect a creator's or editor's intention of the images.

### (Another exemplary embodiment)

The first exemplary embodiment has been described above as an example of the technique disclosed in the present application. However, the technique in the present disclosure is not limited thereto, and can also be applied to exemplary embodiments subjected to alteration, substitution, addition, omission, and the like. In addition, new exemplary embodiments can be made by combining constituent elements described in the first exemplary embodiment.

The first exemplary embodiment has described the configuration example where editing device 105 is included inside reproduction device 103. However, the present disclosure is by no means limited to this configuration example. Editing device 105 may be a device that edits image data, and installed outside reproduction device 103. Furthermore, editing device 105 may write edited image data in recording medium 102 (102A, 102B) or output the edited image data to an outside. When image data edited by editing device 105 is written in recording medium 102 (102A, 102B), editing device 105 may overwrite converted SDR image 132 on SDR image 113 in recording medium 102 (102B) or record converted SDR image 132 in a region different from SDR image 113 in recording medium 102 (102B).

In addition, the first exemplary embodiment has described the operation example as an edit example where editor 143 converts HDR image 112 into converted SDR image 132. However, the edit according to the present disclosure is by no means limited to this operation example. Editor 143 may change at least one of HDR image 112 and SDR image 113, or convert at least one of the HDR image and the SDR image.

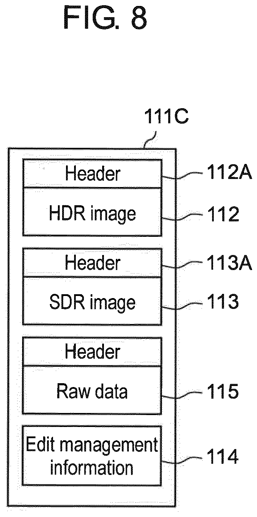

FIG. 8 is a view schematically illustrating a configuration example of image data 111C according to another exemplary embodiment. As illustrated in, for example, FIG. 8, image data 111C may further include Raw data 115 in image data 111 illustrated in FIG. 2A.

When image data 111C is configured as illustrated in FIG. 8, editor 143 may generate the HDR image or the SDR image from Raw data 115.

Furthermore, in a case of this configuration example, edit management information 114 may individually include a flag indicating whether to permit or forbid editing HDR image 112, and a flag indicating whether to permit or forbid editing SDR image 113. Alternatively, edit management information 114 may include a single flag indicating whether to permit or forbid editing both of HDR image 112 and SDR image 113. Furthermore, these flags may indicate whether or not to forbid overwriting edited HDR image 112, SDR image 113 or converted SDR image 132 on original HDR image 112 or SDR image 113 included in image data 111C (i.e., delete original HDR image 112 or SDR image 113 from image data 111C). Furthermore, these flags may indicate whether or not to forbid adding edited HDR image 112, SDR image 113 or converted SDR image 132 to image data 111C. Furthermore, these flags may indicate whether or not to both forbid overwriting edited HDR image 112, SDR image 113 or converted SDR image 132 on original HDR image 112 or SDR image 113 (i.e., delete original HDR image 112 or SDR image 113), and adding edited HDR image 112, SDR image 113 or converted SDR image 132 to image data 111C. Furthermore, these flags may indicate to forbid only part of processing such as conversion of a view angle or conversion of a luminance, or may forbid an effect.

In addition, editor 143 performs edit processing such as above-described conversion processing by using conversion information 114B included in edit management information 114. The first exemplary embodiment has described an example where conversion information 114B is included in edit management information 114. However, conversion information 114B may be included in header 112A or header 113A. Furthermore, conversion information 114B may include at least one information of a plurality of pieces of following information.

For example, HDR image information included in header 112A of HDR image 112 may include information related to the luminance range (dynamic range) of HDR image 112. More specifically, the HDR image information may include information indicating a luminance in an image (a maximum luminance or a center luminance) or a luminance range (dynamic range).

Furthermore, the HDR image information may be information related to shooting for generating HDR image 112, or information related to generation of HDR image 112. HDR image information may include information indicating, for example, a shooting mode (a portrait, a firework, a night scene, or the like) for performing shooting, a priority luminance range, a view angle of HDR image 112, or shooting parameters for performing shooting. The shooting parameters include a shutter speed, an aperture (F number), an ISO speed, a photometry mode, whether or not a flash is used, an exposure correction step value, and a focal distance. In addition, HDR image information may include at least one of information indicating a shooting date, a manufacturer name of a shooting device, a model name of the shooting device, a resolution of an entire image, resolutions in units of horizontal and vertical directions, a shooting direction, and a color space.

In addition, the priority luminance range indicates a luminance range prioritized for HDR image 112 (a luminance range to which more bits are allocated). The priority luminance range is, for example, a graph indicating whether a picture has been made by prioritizing a high luminance region or has been made by prioritizing a low luminance region. In addition, this information may be information indicating a luminance range (a high luminance or a low luminance) to be prioritized. Furthermore, this information may be a parameter (HDR-ETOF or the like) used to generate HDR image 112. Furthermore, this information may be automatically determined according to a shooting mode, or may be set by the user during image editing.

The SDR image information included in header 112A of SDR image 113 is information related to SDR image 113. SDR image information may include, for example, at least one of a view angle of SDR image 113, a conversion parameter (SDR-EOTF or the like) used to generate SDR image 113, and generating device information indicating a device that has generated SDR image 113.

For example, editor 143 may use a priority luminance range included in the HDR image information for conversion processing of converting HDR image 112 into converted SDR image 132. Consequently, editing device 105 can generate converted SDR image 132 that reflects a creator's or editor's intention of HDR image 112.

Next, another operation example of reproduction device 103 will be described.

Editing device 105 of reproduction device 103 imports image data 111 recorded in recording medium 102, in a storage (that is not illustrated and is, for example, a built-in hard disk drive (HDD)) of reproduction device 103 in some cases. Furthermore, as illustrated in FIG. 8, image data 111C configured to include data of a relatively large volume such as Raw data 115 in image data 111 is recorded in recording medium 102 in some cases. In such a case, when reproduction device 103 stores all items of data in recording medium 102 in the storage, a storage capacity of the storage is concerned to run short. Furthermore, when reproduction device 103 is a recorder, reproduction device 103 cannot handle Raw data 115 in some cases. When this reproduction device 103 stores in the storage all items of data in recording medium 102, part of the storage capacity of the storage is likely to be consumed to store unavailable data.

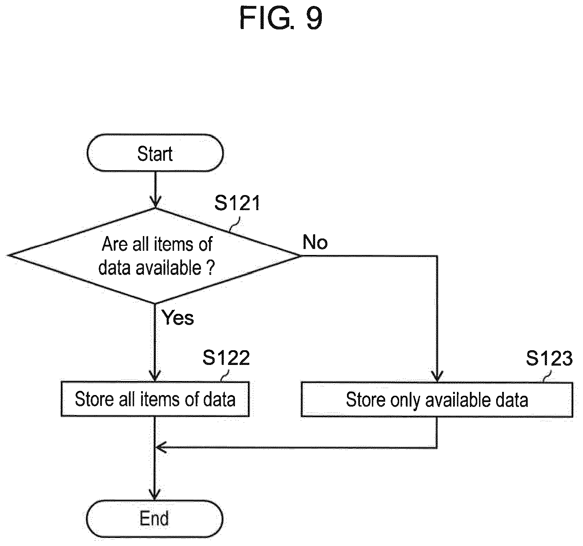

To deal with this problem, reproduction device 103 may perform processing illustrated in FIG. 9. FIG. 9 is a flowchart illustrating an example of data storage processing of reproduction device 103 according to the other exemplary embodiment.

First, determining unit 142 of reproduction device 103 determines whether or not all items of data included in image data 111 (111C) are available (step S121).

When determining unit 142 determines in step S121 that all items of data included in image data 111 (111C) are available (Yes in step S121), editing device 105 of reproduction device 103 stores all items of data included in image data 111 (111C) in the storage (step S122). When, for example, reproduction device 103 receives image data 111 illustrated in FIG. 2A or 2B and determining unit 142 determines that all items of data of this image data 111 are available, editing device 105 of reproduction device 103 stores all items of image data 111 illustrated in FIG. 2A or 2B in the storage.

When determining unit 142 determines in step S121 that part of data included in image data 111 (111C) is unavailable (No in step S121), editing device 105 of reproduction device 103 stores only available data of data included in image data 111 (111C) in the storage (step S123). When, for example, reproduction device 103 receives image data 111C illustrated in FIG. 8 and determining unit 142 determines that Raw data 115 of this image data 111C is unavailable, editing device 105 of reproduction device 103 stores HDR image 112, SDR image 113 and edit management information 114 of image data 111C in the storage and does not store Raw data 115.

In addition, an operation example where data that cannot be handled by reproduction device 103 is Raw data 115 has been described above. However, the present disclosure is by no means limited to this operation example. The data that cannot be handled by reproduction device 103 may be data other than Raw data 115. In this case, editing device 105 may select data to be stored in the storage according to this data that cannot be handled.

Next, an operation example of generating device 101 will be described.

FIG. 10 is a flowchart illustrating an example of image data generation processing of generating device 101 according to the exemplary embodiment.

Generating device 101 generates (obtains) HDR image 112 (step S131).

In step S131, RAW image obtaining unit 121 obtains RAW data 131 that is a still image. RAW data 131 may be obtained by, for example, being shot by generating device 101 that is a shooting device. Furthermore, HDR image generator 122 performs color correction or the like on RAW data 131 to generate (obtain) HDR image 112.

Generating device 101 generates (obtains) SDR image 113 (step S132).

In step S132, SDR image generator 123 generates SDR image 113 from RAW data 131.

Edit manager 125 generates above-described edit management information 114 (step S133). Whether to permit or forbid editing image data 111 is designated by, for example, a user. Furthermore, conversion information 114B included in edit management information 114 is generated by at least one of RAW image obtaining unit 121, HDR image generator 122 and SDR image generator 123.

Output unit 124 outputs HDR image 112, SDR image 113, and edit management information 114 (step S134).

As described above, generating device 101 generates image data 111 including edit management information 114. Thus, editing of HDR image 112 or SDR image 113 is controlled.

The first exemplary embodiment has described the configuration example where generating device 101 is a shooting device. However, the present disclosure is by no means limited to this configuration example. Generating device 101 may be a device that obtains image data obtained by another shooting device, and edits and outputs the image data. In a case of this configuration example, generating device 101 may obtain at least one of an HDR image, an SDR image and Raw data, generate or edit the HDR image and the SDR image based on the obtained data, and generate edit management information 114.

The first exemplary embodiment has described the configuration example where an HDR image and an SDR image are used. However, the present disclosure is not limited to this configuration example. Even when, for example, whether to reproduce the obtained first low quality image as is or to generate the second low quality image from the high quality image and reproduce the second low quality image is switched for the high quality image and the low quality image associated with each other, the same method as the method disclosed in the first exemplary embodiment is applicable.

In addition, in the present disclosure, the high quality image and the low quality image are images showing the same scene (contents). Furthermore, the first exemplary embodiment has described the HDR image and the SDR image as examples of the high quality image and the low quality image. However, the present disclosure is by no means limited to this. The high quality image and the low quality image may be, for example, images whose luminance ranges (dynamic ranges) are different from each other, like the HDR image and the SDR image. Furthermore, the high quality image and the low quality image may be, for example, images of different resolutions, and may be, for example, a UHD (3840 × 2160 pixels) image and an HD (1920 × 1080 pixels) image. Furthermore, the high quality image and the low quality image may be, for example, images of different bit depths, and may be, for example, a 10-bit image and an 8-bit image. Furthermore, the high quality image and the low quality image may be, for example, images of different color resolutions, and may be, for example, a 4:4:4 format image and a 4:2:0 format image. Furthermore, the high quality image and the low quality image may be, for example, images of different color gamut sizes (color spaces), may be, for example, an image according to Rec.ITU_R BT2020 and an image according to Rec.ITU_R BT709 or an image according to AdobeRGB and an image according to sRGB. Furthermore, the high quality image and the low quality image may be images obtained by combining a plurality of these images. In addition, the bit depth is a number of quantization bits constituting one pixel (pixel).

In addition, reproduction device 103 and display device 104 may be connected by a cable with each other or may be connected by radio with each other.

In addition, each processor included in editing device 105, reproduction device 103 or generating device 101 described in the first exemplary embodiment may be realized by a large scale integration (LSI) that is an integrated circuit. These processors may be individually integrated as an integrated circuit (IC) of one chip or may be integrated as an IC of one chip to include part or all of the processors.

Each processor is not limited to the LSI or the IC, but may be constructed with a dedicated circuit or a general-purpose processor. Alternatively, each processor may be constructed with a Field Programmable Gate Array (FPGA) in which a circuit configuration can be programmed or a reconfigurable processor that can reconfigure connection and setting of circuit cells in the LSI.

Each of the constituent elements of the above exemplary embodiments may be constructed with dedicated hardware, or implemented by executing a software program suitable for each constituent element using a processor. A program execution unit such as a central processing unit (CPU) or a processor reads and executes a software program recorded in a recording medium such as a hard disk and a semiconductor memory, whereby each constituent element may be implemented.

In the exemplary embodiments, division of the functional block in the block diagram is only an example. For example, a plurality of functional blocks may be implemented as one functional block, one functional block may be divided into a plurality of functional blocks, or part of the functions may be transferred to another functional block. The functions of a plurality of functional blocks may be processed in parallel or in a time-sharing manner by single piece of hardware or software.

Furthermore, an execution order of each step in the flowcharts illustrated in the drawings in the exemplary embodiments is only an exemplary order. Each step may be executed in order different from the orders described in the exemplary embodiments. Furthermore, part of the above steps may be executed simultaneously (i.e., in parallel) with the other steps.

The present disclosure has described the editing device, the reproduction device and the generating device according to one or a plurality of aspects based on the exemplary embodiments. However, the present disclosure is not limited to these exemplary embodiments. The exemplary embodiments variously modified from the present exemplary embodiment by one of ordinary skill in the art without departing from the scope of the present disclosure, and exemplary embodiments constructed by combining constituent elements of different exemplary embodiments may be included in the scopes of one or a plurality of aspects.

The constituent elements described in the accompanying drawings and the detailed description include not only the constituent elements essential for solving the problem but also constituent elements that are not essential for solving the problem in order to show the above-described technique. For this reason, even if these unessential constituent elements are described in the accompanying drawings and the detailed description, these unessential constituent elements should not be immediately approved as being essential.

The above exemplary embodiments are intended to be illustrative of the technique of the present disclosure, so that various modifications, replacements, additions, omissions, and others can be made.

### INDUSTRIAL APPLICABILITY

The present disclosure is applicable to reproduction devices such as recorders, and generating devices such as cameras or editing devices.

### REFERENCE MARKS IN THE DRAWINGS

100A, 100B: reproduction system
101: generating device
102, 102A, 102B: recording medium
103: reproduction device
104: display device
105: editing device
111, 111A, 111B, 111C: image data
112: HDR image
112A, 113A: header
113: SDR image
114: edit management information
114A: conversion forbid flag
114B: conversion information
115: Raw data
121: RAW image obtaining unit
122: HDR image generator
123: SDR image generator
124: output unit
125: edit manager
131: RAW data
132: converted SDR image
141: obtaining unit
142: determining unit
143: editor
144: reproducer

## Claims

1. An editing method comprising:
obtaining (S101) a high quality image (112) and a first low quality image (113) that are still images showing an identical scene, and edit management information (114) that indicates whether or not to permit editing at least one image of the high quality image (112) and the first low quality image (113), wherein, when the edit management information (114) includes an information indicating whether or not to permit editing the high quality image (112), said information indicates whether or not to permit generating a second low quality image (132) from the high quality image (112) as an editing of the high quality image (112) by conversion; and
editing (S103) the high quality image (112) by conversion, wherein, in the editing, the second low quality image (132) is generated from the high quality image (112), when the edit management information (114) indicates to permit generating the second low quality image (132) from the high quality image (112) as the editing,
wherein, when the edit management information indicates not to permit generating the second low quality image (132) from the high quality image (112) as the editing, the high quality image (112) is not converted into the second low quality image (132).

2. A generating method comprising:
obtaining (S131) RAW data (131);
generating (S131, S132) from the RAW data (131) a high quality image (112) and a first low quality image (113) that are still images showing an identical scene;
generating (S133) edit management information (114) indicating whether or not to permit editing at least one image of the high quality image (112) and the first low quality image (113) wherein, when the edit management information (114) includes an information indicating whether or not to permit editing the high quality image (112), said information indicates whether or not to permit generating a second low quality image (132) from the high quality image (112) as an editing of the high quality image (112) by conversion; and
outputting (S134) the high quality image (112), the first low quality image (113), and the edit management information (114).

3. An editing device (105) comprising:
an obtaining unit (141) that obtains a high quality image (112) and a first low quality image (113) that are still images showing an identical scene, and edit management information (114) that indicates whether or not to permit editing at least one image of the high quality image (112) and the first low quality image (113), wherein, when the edit management information (114) includes an information indicating whether or not to permit editing the high quality image (112), said information indicates whether or not to permit generating a second low quality image (132) from the high quality image (112) as an editing of the high quality image (112) by conversion; and
an editor (143) that edits the high quality image by conversion to generate the second low quality image (132) when the edit management information (114) indicates to permit generating the second low quality image (132) from the high quality image (112) as the editing,
wherein, when the edit management information (114) indicates not to permit generating the second low quality image (132) from the high quality image (112) as the editing, the high quality image (112) is not converted into the second low quality image (132).

4. A generating device (101) comprising:
an obtaining unit (121) that obtains RAW data (131);
an image generator (122, 123) that generates from the RAW data (131) a high quality image (112) and a first low quality image (113) that are still images showing an identical scene;
a generator (125) that generates edit management information (114) indicating whether or not to permit editing at least one image of the high quality image (112) and the first low quality image (113), wherein, when the edit management information (114) includes an information indicating whether or not to permit editing the high quality image (112), said information indicates whether or not to permit generating a second low quality image (132) from the high quality image (112) as an editing of the high quality image (112) by conversion; and
an output unit that outputs the high quality image, the first low quality image, and the edit management information.

5. A recording medium (102) having recorded thereon;
a high quality image (112) and a first low quality image (113) that are still images showing an identical scene; and
edit management information (114) that indicates whether or not to permit editing at least one image of the high quality image and the first low quality image, wherein, when the edit management information (114) includes an information indicating whether or not to permit editing the high quality image (112), said information indicates whether or not to permit generating a second low quality image (132) from the high quality image (112) as an editing of the high quality image (112) by conversion.

## Patentansprüche

1. Bearbeitungsverfahren, das Folgendes umfasst:
Erhalten (S101) eines Bildes (112) hoher Qualität und eines ersten Bildes (113) niedriger Qualität, die Standbilder sind, die eine identische Szene zeigen, und Bearbeitungsverwaltungsinformationen (114), die anzeigen, ob das Bearbeiten mindestens eines Bildes des Bildes (112) hoher Qualität und des ersten Bildes (113) niedriger Qualität zuzulassen ist oder nicht, wobei, wenn die Bearbeitungsverwaltungsinformationen (114) Informationen umfassen, die anzeigen, ob das Bearbeiten des Bildes (112) hoher Qualität zuzulassen ist oder nicht, die Informationen anzeigen, ob das Erzeugen eines zweiten Bildes (132) niedriger Qualität aus dem Bild (112) hoher Qualität als ein Bearbeiten des Bildes (112) hoher Qualität durch Umwandlung zuzulassen ist oder nicht; und
Bearbeiten (S103) des Bildes (112) hoher Qualität durch Umwandlung, wobei das zweite Bild (132) niedriger Qualität beim Bearbeiten aus dem Bild (112) hoher Qualität erzeugt wird, wenn die Bearbeitungsverwaltungsinformationen (114) anzeigen, dass das Erzeugen des zweiten Bildes (132) niedriger Qualität aus dem Bild (112) hoher Qualität als das Bearbeiten zuzulassen ist,
wobei, wenn die Bearbeitungsverwaltungsinformationen anzeigen, dass das Erzeugen des zweiten Bildes (132) niedriger Qualität aus dem Bild (112) hoher Qualität als das Bearbeiten nicht zuzulassen ist, das Bild (112) hoher Qualität nicht in das zweite Bild (132) niedriger Qualität umgewandelt wird.

2. Erzeugungsverfahren, das Folgendes umfasst:
Erhalten (S131) von ROHdaten (131);
Erzeugen (S131, S132) eines Bildes (112) hoher Qualität und eines ersten Bildes (113) niedriger Qualität, die Standbilder sind, die eine identische Szene zeigen, aus den ROHdaten (131);
Erzeugen (S133) von Bearbeitungsverwaltungsinformationen (114), die anzeigen, ob das Bearbeiten mindestens eines Bildes des Bildes (112) hoher Qualität und des ersten Bildes (113) niedriger Qualität zuzulassen ist oder nicht, wobei, wenn die Bearbeitungsverwaltungsinformationen (114) Informationen umfassen, die anzeigen, ob das Bearbeiten des Bildes (112) hoher Qualität zuzulassen ist oder nicht, die Informationen anzeigen, ob das Erzeugen eines zweiten Bildes (132) niedriger Qualität aus dem Bild (112) hoher Qualität als einer Bearbeitung des Bildes (112) hoher Qualität durch Umwandlung zuzulassen ist oder nicht; und
Ausgeben (S134) des Bildes (112) hoher Qualität, des ersten Bildes (113) niedriger Qualität und der Bearbeitungsverwaltungsinformationen (114).

3. Bearbeitungsvorrichtung (105), die Folgendes umfasst:
eine Erhaltungseinheit (141), die ein Bild (112) hoher Qualität und ein erstes Bild (113) niedriger Qualität, die Standbilder sind, die eine identische Szene zeigen, und Bearbeitungsverwaltungsinformationen (114) erhält, die anzeigen, ob das Bearbeiten mindestens eines Bildes des Bildes (112) hoher Qualität und des ersten Bildes (113) niedriger Qualität zuzulassen ist oder nicht, wobei, wenn die Bearbeitungsverwaltungsinformationen (114) Informationen umfassen, die anzeigen, ob das Bearbeiten des Bildes (112) hoher Qualität zuzulassen ist oder nicht, die Informationen anzeigen, ob das Erzeugen eines zweiten Bildes (132) niedriger Qualität aus dem Bild (112) hoher Qualität als ein Bearbeiten des Bildes (112) hoher Qualität durch Umwandlung zuzulassen ist oder nicht; und
einen Bearbeiter (143), der das Bild hoher Qualität durch Umwandlung bearbeitet, um das zweite Bild (132) niedriger Qualität zu erzeugen, wenn die Bearbeitungsverwaltungsinformationen (114) anzeigen, dass das Erzeugen des zweiten Bildes (132) niedriger Qualität aus dem Bild (112) hoher Qualität als das Bearbeiten zuzulassen ist,
wobei, wenn die Bearbeitungsverwaltungsinformationen (114) anzeigen, dass das Erzeugen des zweiten Bildes (132) niedriger Qualität aus dem Bild (112) hoher Qualität als das Bearbeiten nicht zuzulassen ist, das Bild (112) hoher Qualität nicht in das zweite Bild (132) niedriger Qualität umgewandelt wird.

4. Erzeugungsvorrichtung (101), die Folgendes umfasst:
eine Erhaltungseinheit (121), die ROHdaten (131) erhält;
einen Bilderzeuger (122, 123), der ein Bild (112) hoher Qualität und ein erstes Bild (113) niedriger Qualität, die Standbilder sind, die eine identische Szene zeigen, aus den ROHdaten (131) erzeugt;
einen Erzeuger (125), der Bearbeitungsverwaltungsinformationen (114) erzeugt, die anzeigen, ob das Bearbeiten mindestens eines Bildes des Bildes (112) hoher Qualität und des ersten Bildes (113) niedriger Qualität zuzulassen ist oder nicht, wobei, wenn die Bearbeitungsverwaltungsinformationen (114) Informationen umfassen, die anzeigen, ob das Bearbeiten des Bildes (112) hoher Qualität zuzulassen ist oder nicht, die Informationen anzeigen, ob das Erzeugen eines zweiten Bildes (132) niedriger Qualität aus dem Bild (112) hoher Qualität als ein Bearbeiten des Bildes (112) hoher Qualität durch Umwandlung zuzulassen ist oder nicht; und
eine Ausgabeeinheit, die das Bild hoher Qualität, das erste Bild niedriger Qualität und die Bearbeitungsverwaltungsinformationen ausgibt.

5. Aufzeichnungsmedium (102), auf dem Folgendes aufgezeichnet ist;
ein Bild (112) hoher Qualität und ein erstes Bild (113) niedriger Qualität, die Standbilder sind, die eine identische Szene zeigen; und
Bearbeitungsverwaltungsinformationen (114), die anzeigen, ob das Bearbeiten mindestens eines Bildes des Bildes (112) hoher Qualität und des ersten Bildes niedriger Qualität zuzulassen ist oder nicht, wobei, wenn die Bearbeitungsverwaltungsinformationen (114) Informationen umfassen, die anzeigen, ob das Bearbeiten des Bildes hoher Qualität zuzulassen ist oder nicht, die Informationen anzeigen, ob das Erzeugen eines zweiten Bildes (132) niedriger Qualität aus dem Bild (112) hoher Qualität als ein Bearbeiten des Bildes (112) hoher Qualität durch Umwandlung zuzulassen ist oder nicht.

## Revendications

1. Procédé d'édition comprenant les étapes consistant à :
obtenir (S101) une image à haute qualité (112) et une première image à basse qualité (113) qui sont des images fixes montrant une scène identique, et des informations de gestion d'édition (114) qui indiquent s'il faut ou non permettre l'édition d'au moins une image parmi l'image à haute qualité (112) et la première image à basse qualité (113), dans lequel, lorsque les informations de gestion d'édition (114) comportent des informations indiquant s'il faut ou non permettre l'édition de l'image à haute qualité (112), lesdites informations indiquent s'il faut ou non permettre la génération d'une deuxième image à basse qualité (132) à partir de l'image à haute qualité (112) en tant qu'édition de l'image à haute qualité (112) par conversion ; et
éditer (S103) l'image à haute qualité (112) par conversion, dans lequel, lors de l'édition, la deuxième image à basse qualité (132) est générée à partir de l'image à haute qualité (112) lorsque les informations de gestion d'édition (114) indiquent de permettre la génération de la deuxième image à basse qualité (132) à partir de l'image à haute qualité (112) en tant qu'édition,
dans lequel, lorsque les informations de gestion d'édition indiquent de ne pas permettre la génération de la deuxième image à basse qualité (132) à partir de l'image à haute qualité (112) en tant qu'édition, l'image à haute qualité (112) n'est pas convertie en la deuxième image à basse qualité (132).

2. Procédé de génération comprenant les étapes consistant à :
obtenir (S131) des données RAW (131) ;
générer (S131, S132) à partir des données RAW (131) une image à haute qualité (112) et une première image à basse qualité (113) qui sont des images fixes montrant une scène identique ;
générer (S133) des informations de gestion d'édition (114) indiquant s'il faut ou non permettre l'édition d'au moins une image parmi l'image à haute qualité (112) et la première image à basse qualité (113) dans lequel, lorsque les informations de gestion d'édition (114) comportent des informations indiquant s'il faut ou non permettre l'édition de l'image à haute qualité (112), lesdites informations indiquent s'il faut ou non permettre la génération d'une deuxième image à basse qualité (132) à partir de l'image à haute qualité (112) en tant qu'édition de l'image à haute qualité (112) par conversion ; et
délivrer en sortie (S134) l'image à haute qualité (112), la première image à basse qualité (113) et les informations de gestion d'édition (114).

3. Dispositif d'édition (105) comprenant :
une unité d'obtention (141) qui obtient une image à haute qualité (112) et une première image à basse qualité (113) qui sont des images fixes montrant une scène identique, et des informations de gestion d'édition (114) qui indiquent s'il faut ou non permettre l'édition d'au moins une image parmi l'image à haute qualité (112) et la première image à basse qualité (113), dans lequel, lorsque les informations de gestion d'édition (114) comportent des informations indiquant s'il faut ou non permettre l'édition de l'image à haute qualité (112), lesdites informations indiquent s'il faut ou non permettre la génération d'une deuxième image à basse qualité (132) à partir de l'image à haute qualité (112) en tant qu'édition de l'image à haute qualité (112) par conversion ; et
un éditeur (143) qui édite l'image à haute qualité par conversion pour générer la deuxième image à basse qualité (132) lorsque les informations de gestion d'édition (114) indiquent de permettre la génération de la deuxième image à basse qualité (132) à partir de l'image à haute qualité (112) en tant qu'édition,
dans lequel, lorsque les informations de gestion d'édition (114) indiquent de ne pas permettre la génération de la deuxième image à basse qualité (132) à partir de l'image à haute qualité (112) en tant qu'édition, l'image à haute qualité (112) n'est pas convertie en la deuxième image à basse qualité (132).

4. Dispositif de génération (101) comprenant :
une unité d'obtention (121) qui obtient des données RAW (131) ;
un générateur d'images (122, 123) qui génère, à partir des données RAW (131), une image à haute qualité (112) et une première image à basse qualité (113) qui sont des images fixes montrant une scène identique ;
un générateur (125) qui génère des informations de gestion d'édition (114) indiquant s'il faut ou non permettre l'édition d'au moins une image parmi l'image à haute qualité (112) et la première image à basse qualité (113), dans lequel, lorsque les informations de gestion d'édition (114) comportent des informations indiquant s'il faut ou non permettre l'édition de l'image à haute qualité (112), lesdites informations indiquent s'il faut ou non permettre la génération d'une deuxième image à basse qualité (132) à partir de l'image à haute qualité (112) en tant qu'édition de l'image à haute qualité (112) par conversion ; et
une unité de sortie qui délivre en sortie l'image à haute qualité, la première image à basse qualité et les informations de gestion d'édition.

5. Support d'enregistrement (102) sur lequel sont enregistrées :
une image à haute qualité (112) et une première image à basse qualité (113) qui sont des images fixes montrant une scène identique ; et
des informations de gestion d'édition (114) qui indiquent s'il faut ou non permettre l'édition d'au moins une image parmi l'image à haute qualité et la première image à basse qualité, dans lequel, lorsque les informations de gestion d'édition (114) comportent des informations indiquant s'il faut ou non permettre l'édition de l'image à haute qualité (112), lesdites informations indiquent s'il faut ou non permettre la génération d'une deuxième image à basse qualité (132) à partir de l'image à haute qualité (112) en tant qu'édition de l'image à haute qualité (112) par conversion.
